(19) **Europäisches Patentamt / European Patent Office / Office européen des brevets**

(11) **EP 3 929 046 B1**

(12) **EUROPEAN PATENT SPECIFICATION**

(45) Date of publication and mention
of the grant of the patent:
**04.10.2023 Bulletin 2023/40**

(21) Application number: **19915876.7**

(22) Date of filing: **26.11.2019**

(51) International Patent Classification (IPC):
**B60W 30/06** (2006.01)    **B62D 15/02** (2006.01)

(52) Cooperative Patent Classification (CPC):
**B62D 15/027; B62D 15/0285**

(86) International application number:
**PCT/CN2019/120799**

(87) International publication number:
**WO 2020/168769 (27.08.2020 Gazette 2020/35)**

(54) **VERTICAL PARKING METHOD**

VERTIKALPARKVERFAHREN

PROCÉDÉ DE STATIONNEMENT VERTICAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2019 CN 201910121262**

(43) Date of publication of application:
**29.12.2021 Bulletin 2021/52**

(73) Proprietor: **Huizhou Desay SV Intelligent Transportation Technological Institute Co., Ltd.**
**Huizhou, Guangdong 516006 (CN)**

(72) Inventors:
• **HU, Kunfu**
  **Huizhou, Guangdong 516006 (CN)**
• **LUO, Zuohuang**
  **Huizhou, Guangdong 516006 (CN)**
• **FAN, Xiaojuan**
  **Huizhou, Guangdong 516006 (CN)**
• **SHI, Yunpeng**
  **Huizhou, Guangdong 516006 (CN)**

(74) Representative: **karo IP**
**karo IP Patentanwälte**
**Kahlhöfer Rößler Kreuels PartG mbB**
**Platz der Ideen 2**
**40476 Düsseldorf (DE)**

(56) References cited:
EP-A1- 2 234 085          CN-A- 106 143 609
CN-A- 106 143 609        CN-A- 109 131 317
CN-A- 109 927 715        JP-A- H0 628 598
US-A1- 2016 280 263      US-A1- 2017 210 421
US-A1- 2018 297 589

EP 3 929 046 B1

## Description

### Technical Field

The present invention relates to a parking method, in particular to a vertical parking method.

### Background Art

As an intelligent driving technology develops, research and development on an automatic parking technology also develops at high speed. For example, the Invention Patent Application Autonomous Parking of Vehicle in Vertical Parking Spot of the patent application number 201810031452.4, filed on January 12, 2018 discloses an automatic parking technology. Most of the existing motor vehicles are equipped with ultrasonic sensors for detecting obstacles so as to help drivers to eliminate blind spots and blurred visions and improve the driving safety. Because the ultrasonic sensors are economical and practical and have multiple functions, most of the existing automatic parking technologies employ ultrasonic waves for automatically searching parking spots. However, limited by the characteristics of the ultrasonic sensors and the characteristic of strong dependence of acoustic wave propagation on a peripheral environment, when the ultrasonic waves are used for searching the parking spots, large estimation errors of the positions of the parking spots are often produced; and meanwhile, by superimposing errors of deviating from parking preset tracks, which may be caused by vehicle locating, the success rate that the vehicles are parked into the parking spots under multiple complex working conditions is greatly US 2017/210421 A1 discloses the features of the preamble of claim 1.

### Summary of the Invention

An objective of the present invention is to provide a vertical parking method with a small parking spot estimation error during parking.

In the vertical parking method, in a process that an initial vertical parking spot and coordinate information of an outer boundary of the initial vertical parking spot are obtained through detection with sensors or from a third party for parking, a starting reference line located beyond an inlet short edge of the initial vertical parking spot is defined, a shortest distance between each point in the starting reference line and the inlet short edge is larger than a trigger threshold of a detection distance of each ultrasonic sensor at each vehicle corner of a vehicle; and a vehicle corner which may first cross the starting reference line in the parking process is defined as a first vehicle corner. The vertical parking method includes the steps of:

> step 1, locating an obstacle when coordinate information of a preset position, close to a first vehicle corner, of a vehicle is located in the starting reference line or on one side, close to the initial vertical parking spot, of the starting reference line, and ultrasonic sensors at the first vehicle corner detect the obstacle, and then executing step 2;

> step 2, calculating coordinate information of a point O at which the obstacle is most possibly in contact to the vehicle, and calculating coordinate information of an outer boundary of a relocated target vertical parking spot according to the point O, the first vehicle corner and the coordinate information of the outer boundary of the initial vertical parking spot; and

> step 3, conducting parking according to the coordinate information of the outer boundary of the target vertical parking spot.

As an implementation, in the step 2, a method of calculating the coordinate information of the outer boundary of the target vertical parking spot comprises the steps of:

> calculating a slope $K_1$ of a long edge of the initial vertical parking spot;

> obtaining a second straight line which passes through the first vehicle corner and has a slop $K_1$;

> calculating coordinate information of an intersection of the second straight line and the inlet short edge of the initial vertical parking spot; and

> translating the initial vertical parking spot in a direction, away from the obstacle, along the inlet short edge to obtain the coordinate information of the outer boundary of the target vertical parking spot by enabling a corner point, close to the first vehicle corner, of the target vertical parking spot to be located at the intersection.

As an implementation, in the step 2, a method of calculating the coordinate information of the point O at which the obstacle is most possibly in contact to the vehicle comprises the steps of:

recording an obstacle coordinate point set W={(obj_x(n), obj_y(n)) | N=1,2,3,...N} with a data length being N in a form of a sliding window according to time, wherein N is natural integer, obj_x(n) is a coordinate value in an X axis of the obstacle, and obj_y(n) is a coordinate value in an Y axis of the obstacle;

conducting least-square line fitting on the point set W to obtain a straight line L:

$$y=K*x+b;$$

solving a mean square root Var of a distance between each point in the point set W and the straight line L:

$$Var= \sqrt{(\sum_{i=1}^{N} \frac{|K*obj\_x(i)-b-obj\_y(i)|^2}{1+K^2})/N}$$

and judging the value of Var, considering that the point set W does not meet the calculation requirement if Var is larger than a preset value, then executing the step 1 again, or otherwise, determining a horizontal ordinate O_x=obj_x(N) and a longitudinal coordinate O_y=obj_y(N) of the point O.

Preferably, in the step 1, if the obstacle cannot be located, step 4 is executed, comprising the steps of: calculating the coordinate information of the outer boundary of the target vertical parking spot according to an obstacle detection distance Dist of each ultrasonic sensor at the first vehicle corner, the first vehicle corner and the coordinate information of the corner point, close to the first vehicle corner, of the inlet short edge of the initial vertical parking spot, and then executing the step 3.

As an implementation, in the step 4, the method of calculating the coordinate information of the outer boundary of the target vertical parking spot comprises the steps of: calculating an offset Delt: $|B\_y-Pd\_y|-sqrt(Dist^2-|B\_x-Pd\_x|^2)$ of the target vertical parking spot relative to the initial vertical parking spot in an Y axis direction, wherein the Y axis is substantially parallel to the inlet short edge of the initial vertical parking spot, B_x and B_y are coordinate values in the X axis and the Y axis of a corner point B, close to the first vehicle corner, of the initial vertical parking spot respectively; Pd_x and Pd_y are coordinate values of the first vehicle corner in the X axis and the Y axis respectively; and translating the initial vertical parking spot in the direction, away from the obstacle, along the inlet short edge with the offset Delt, thus obtaining the coordinate information of the outer boundary of the target vertical parking spot.

Preferably, a middle reference line is further defined and is located between the inlet short edge of the initial vertical parking spot and a bottom short edge of the initial vertical parking spot. The vertical parking method further comprises the steps of: when the coordinate information of the preset position of the vehicle is between the middle reference line and the bottom short edge of the initial vertical parking spot, obstacle detection distances of the ultrasonic sensors for detecting obstacles on the two sides of the vehicle at the first vehicle corner and a second vehicle corner opposite to the first vehicle corner of the vehicle are DistR and DistL respectively, the first vehicle corner is a right rear corner, and the second vehicle corner is a left rear corner, executing step 5; and judging whether at least one side of the vehicle has an enough position for a person to get on or off the vehicle according to the DistR, the DistL and a trigger threshold DistTh_Up of the detection distance of each ultrasonic sensor at each corner of the vehicle, outputting a prompting message of a parking spot which cannot be used for parking according to a judgment result, or calculating the coordinate information of the outer boundary of the target vertical parking spot according to a judgment result, and executing step 3 to enable the person to get on or off the vehicle from at least one side of the vehicle after parking is completed.

As an implementation, in the step 5, the method of judging whether at least one side of the vehicle has the enough position for the person to get on or off the vehicle comprises the steps of:

(1) when (DistL+DistR)<2*DistTh_Up, determining the parking spot which cannot be used for parking and outputting the prompting message, wherein DistTh_Up is the trigger threshold of the detection distance of each ultrasonic sensor at each corner of the vehicle; and

(2) if (DistL+DistR)≥2*DistTh_Up:

(a) if DistL>DistTh_Up and DistR > DistTh_Up, determining that parking may be continued;

(b) if DistL>DistTh_Up and DistR≤DistTh_Up, determining that the obstacle exists on the right side of the vehicle, and determining that a parking spot adjustment offset to be Delt=DistTh_Up-DistR, then calculating the coordinate information of the outer boundary of the target vertical parking spot, and executing the step 3; and

(c) if DistL≤DistTh_Up and DistR>DistTh_Up, considering that the obstacle exists on the left side of the vehicle, and determining an offset needing to be adjusted to be Delt=DistTh_Up-DistL, then calculating the coordinate information of the outer boundary of the target vertical parking spot, and executing the step 3.

Preferably, when the first vehicle corner is a vehicle front corner, the preset position is a midpoint of a boundary of a head of the vehicle; and when the first vehicle corner is a vehicle rear corner, the preset position is a midpoint of a boundary of a tail of the vehicle.

As an implementation, an end reference line, close to the bottom short edge of the initial vertical parking spot, is further defined; and parking is completed when the preset position is judged to arrive the end reference line.

As an implementation, when the vehicle is judged to wholly enter the inlet short edge of the parking spot, parking is completed.

As an implementation, a distance between the middle reference line and the inlet short edge is 2.3-2.6m, and a distance between the end reference line and the middle reference line is 1.8-2.2m.

In the vertical parking method of the present invention, in the parking process, by continuously locating surrounding obstacles with the ultrasonic sensors of the vehicle and adjusting a coordinate of the vertical parking spot in real time according to whether the obstacles are detected or not and a distance from each obstacle, the estimation error of the original parking spot is eliminated, and the accuracy rate that the vehicle is parked into the parking spot is increased. The situation that after the vehicle is parked into the parking spot, as a distance between the vehicle and a reference vehicle on the left side or the right side is relatively small, a passenger cannot normally get off the vehicle is further avoided; and the situation that at the last step that the vehicle is parked into the parking spot, braking of the vehicle is interrupted as the vehicle encounters the obstacle in the vehicle advancing process due to an error of the parking spot, and the user experience is influenced is also avoided.

## Brief Description of the Drawings

FIG. 1 is a schematic diagram of positional relationship among a large coordinate system x-o-y, a vehicle, an initial vertical parking spot and a reference line in a vertical parking method of one embodiment.

FIG. 2 is a schematic layout diagram of ultrasonic sensors at the tail of a vehicle of one embodiment.

FIG. 3 is a flow chart of a vertical parking method of one embodiment.

FIG. 4 is a schematic diagram of relocating a parking spot in the vertical parking method of one embodiment.

FIG. 5 is a partial enlarged drawing of FIG. 4.

FIG. 6 is a schematic diagram of relocating a parking spot in a region D2 in one embodiment.

## Detailed Description of the Invention

The vertical parking method of the present invention is described in further detail in combination with specific embodiments and the drawings below.

A vehicle capable of applying the method of the present invention should include an automatic or semi-automatic driving system capable of driving the vehicle with simplified input by a driver and sensors for collecting information of a surrounding environment of the vehicle, for example, sensors for obtaining environment images, a vehicle speed, surrounding obstacles, a temperature, a humidity and the like. The driving system executes functions of deceleration, steering, acceleration, braking, pedestrian recognition, parking spot recognition, automatic or semi-automatic parking and the like based on the collected information. The automatic or semi-automatic parking refers to an automatic or semi-automatic driving state. In the automatic driving state, the motion activity (for example, steering, turning, acceleration, deceleration and the like) is controlled to enable the vehicle to be parked into a parking spot without requiring direct input by the driver. In the semi-automatic driving state, the vehicle may need the driver to input some confirm passwords to continuously execute some unconventional motion activities for controlling the vehicle to enable the vehicle to be parked into the parking spot under some conditions.

In the present invention, the ultrasonic sensors are loaded at the four corners of the vehicle, so that when parking in a vertical parking spot is conducted, relocating of the vertical parking spot and vertical parking may be achieved based on signals output by the ultrasonic sensors. "Vertical parking" refers to that a parking inlet of a target parking spot is located at a short edge of the target parking spot, and obstacles such as other parking spots, walls and columns may be adjacent to long edges of the target parking spot. Here, in order to avoid confusion, the parking spot is referred to as the vertical parking spot.

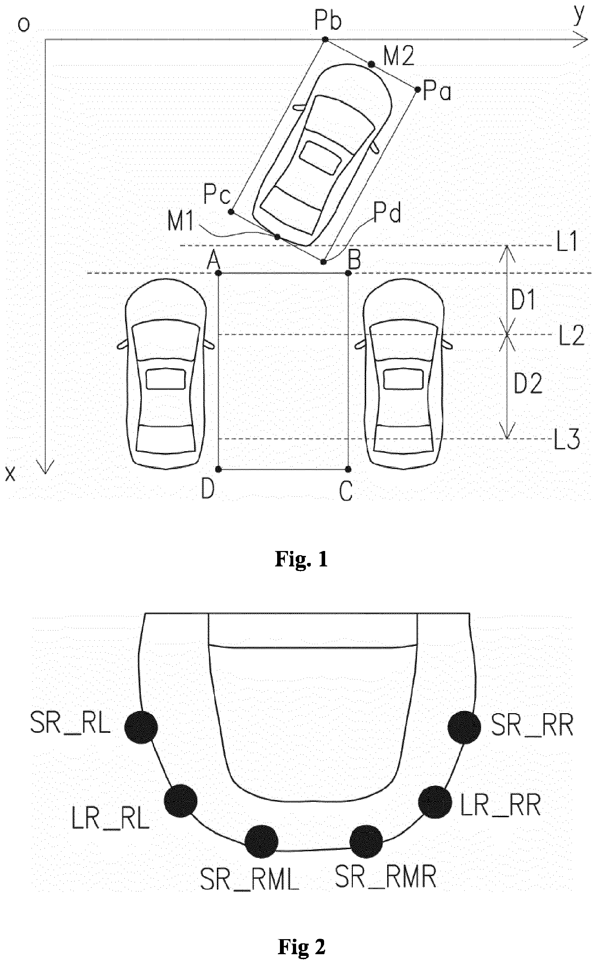

Further, in the vertical parking method of the present invention, parking is allowed in a direction that the vehicle advances forwards or is driven backwards. When the vehicle is parked by advancing forwards, the ultrasonic sensors at the two front corners of the head of the vehicle are mainly used. When the vehicle is parked by being driven backwards, the ultrasonic sensors at the two rear corners of the tail of the vehicle are mainly used. The "front corners" of the vehicle refer to vehicle portions at which the front surface (a boundary of the vehicle head) of the vehicle and the side surfaces (side boundaries of a vehicle body) converge, generally being curved surfaces connecting the front surface and the side surfaces of the vehicle and including a left front corner and a right front corner. The "rear corners" of the vehicle refer to vehicle portions at which the rear surface (a boundary of the vehicle tail) of the vehicle and the side surfaces converge, generally being curved surfaces connecting the rear surface and the side surfaces of the vehicle and including a left rear corner and a right rear corner. In the automatic or semi-automatic driving system, the vehicle is generally represented in a right-angled rectangular top viewing state (as shown in FIG. 1) or a rectangular top viewing state with a certain rounded angle. For convenience of description, this article makes description with the situation that the vehicle is generally represented in the right-angled rectangular top viewing state as an example, and the left front corner, the right front corner, the left rear corner and the right rear corner of the vehicle are denoted as Pb, Pa, Pc and Pd respectively. When the vehicle is represented in the rectangular top viewing state with a certain rounded angle in the automatic or semi-automatic driving system, one point in the rounded angle should default to a corner point which has the same function with the points Pb, Pa, Pc and Pd in FIG. 1. Further, the midpoint of the boundary of the tail of the vehicle is denoted as M1, and the midpoint of the boundary of the head of the vehicle is denoted as M2.

In this embodiment, three ultrasonic sensors are arranged at each corner of the vehicle; while in other embodiments, other sensor combinations or integrated sensors with a similar function may be employed. Referring to FIG. 2, with the left rear corner and the right rear corner as examples (the left front corner and the right front corner are similar to and substantially symmetric with respect to the left rear corner and the right rear corner), the left rear corner is provided with the ultrasonic sensors SR_RL, LR_RL and SR_RML, and the right rear corner is provided with the ultrasonic sensors SR_RR, LR_RR and SR_RMR. Adjacent ultrasonic sensors may from public detection FOV (Field of View) and use a triangulation location method to locate the obstacle based on a single-input multiple-output mechanism of ultrasonic waves, wherein the ultrasonic sensors SR_RL and SR_RR are arranged at the positions, closer to the two sides of the vehicle body, of the corner respectively and are used for detecting the obstacles on the two sides of the tail of the vehicle respectively; the ultrasonic sensors SR_RML and SR_RMR are arranged closer to the midpoint M1 of the boundary of the tail of the vehicle, of the corner respectively and are used for detecting the obstacle on the rear side of the tail of the vehicle; and the ultrasonic sensors LR_RL and LR_RR are close to the points Pc and Pd in FIG. 1 respectively and are used for detecting the obstacles right opposite to the corners of the tail of the vehicle respectively.

In the vertical parking process, if the vehicle generally enters the parking spot in a state nearly parallel to the initial vertical parking spot, the positional relationship among the large coordinate system x-o-y, the vehicle and the initial vertical parking spot is as shown in FIG. 1 generally (in different situations, merely differing in left or right inclination of the vehicle or entering the parking spot by the head or the tail of the vehicle), and the X axis of the coordinate system is generally parallel to (virtually or visually substantially parallel to) the long edges of the initial vertical parking spot with a deviation smaller than or equal to 6° generally. Before the vehicle is parked into the parking spot, the automatic or semi-automatic driving system of the vehicle should use the sensors to detect the initial vertical parking spot with the four corners denoted as A, B, C and D and the outer boundary (a solid box formed by connecting the points A, B, C and D), as shown in FIG. 1 and to detect that coordinate information of the four corners in the large coordinate system x-o-y is (A_x, A_y), (B_x, B_y), (C_x, C_y) and (D_x, D_y) respectively. At this time, coordinates of the corner points Pb, Pa, Pc and Pd of the vehicle are (Pb_x, Pb_y), (Pa_x, Pa_y), (Pc_x, Pc_y) and (Pd_x, Pd_y) respectively, coordinate information of the midpoint M1 of the boundary of the tail of the vehicle is (M1_x, M1_y, Theta), and coordinate information of the midpoint M2 of the boundary of the head of the vehicle is (M2_x, M2_y, Theta), wherein in the coordinate information, all the coordinate information followed by "_x" is coordinate values in the X axis, all the coordinate information followed by "_y" is coordinate values in the Y axis, and Theta is an included angle formed by a direction of the vehicle (M1-M2) and a direction of the X axis. Further, a starting reference line L1, a middle reference line L2 and an end reference line L3 are defined and are all parallel to short edges AB (the inlet short edge) and CD (the bottom short edge) of the initial vertical parking spot. The starting reference line L1 is located beyond the inlet short edge AB of the initial vertical parking spot. A distance between the starting reference line L1 and the inlet short edge AB is 0.4-0.6m, is relevant to a trigger range of the ultrasonic sensors and should be larger than a trigger threshold of the detection distance of each ultrasonic sensor, being 0.5m in the embodiment. The middle reference line L2 and the end reference line L3 are both located in the initial vertical parking spot, the middle reference line L2 is located between the inlet short edge AB and the end reference line L3, and the end reference line L3 is located between the middle reference line L2 and the short edge CD. A distance between the middle reference line L2 and the starting reference line L1 is 2.3-2.6m, being 2.5m in the embodiment; and a distance between the end reference line L3 and the starting reference line L1 is 1.8-2.2m, being 2m in the embodiment. Wherein a region formed by the starting reference line L1, the middle reference line L2 and extended lines of long edges AD, BC of the initial vertical parking spot in an enclosing manner is denoted as D1, and a region formed by the end reference line L3, the middle reference line L2 and the long edges AD, BC of the initial vertical parking spot in the enclosing manner is denoted as D2. It is to be understood that the starting reference line L1, the middle reference line L2 and the end reference line L3 may totally or partially be curves (nonlinear lines). When the starting reference line is the curve, the starting reference line is located beyond an inlet short edge of the initial vertical parking spot, a shortest distance (a length of a perpendicular line segment) between each point in the starting reference line and the inlet short edge is larger than the trigger threshold of the detection range of each ultrasonic sensor of each vehicle corner of the vehicle. When the end reference line is the nonlinear line, a distance between the end reference line and the middle reference line L2 should fall in a range from 1.8m to 2.2m. The middle reference line is used for triggering a second parking spot relocating state, and at this time, the vehicle is in a state substantially parallel to the parking spot, so that the middle reference line is virtually or generally in a straight line.

For convenience of description, in the embodiment, the vehicle corner which first crosses the starting reference line L1 in the parking process is set to be the right rear corner Pd (the first vehicle corner).

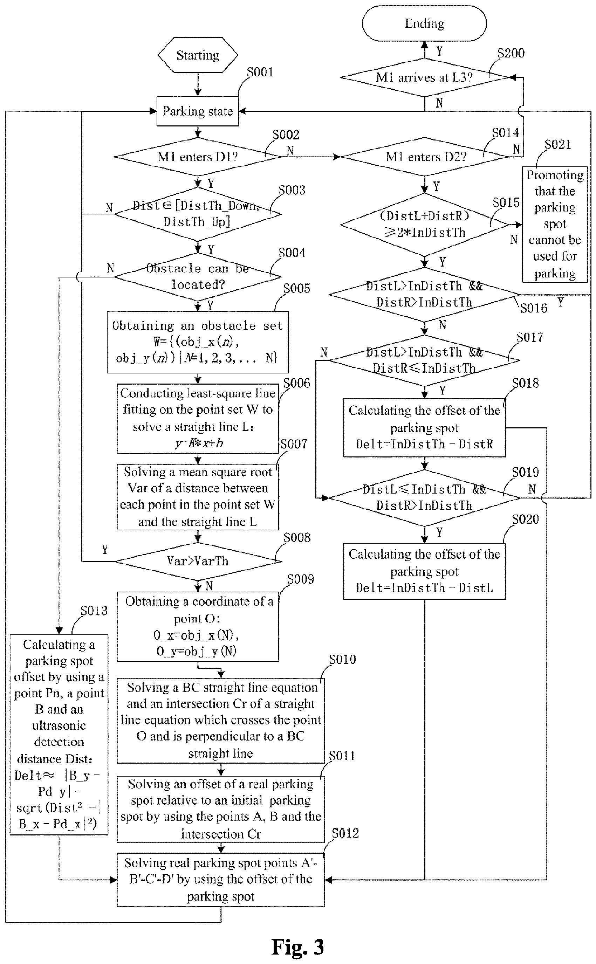

Referring to FIGs. 3-6, in one embodiment, the vertical parking method of the present invention includes the steps of:

S001, entering a parking state, judging the parking state to be a reverse parking state, and obtaining the initial vertical parking spot and the coordinate information of the outer boundaries of the initial vertical parking spot.

S002, judging whether the point M1 is in the starting reference line L1 or has entered the region D1 (that is, between the starting reference line L1 and the middle reference line L2) or not according to the coordinate information (M1_x, M1_y, Theta) of the point M1 of the boundary of the tail of the vehicle, if yes, entering a first parking spot relocating state, and executing step S003, or otherwise, executing step S004.

S003, when the obstacle detection distance Dist of the ultrasonic sensors SR_RR and LR_RR of the first vehicle corner (the right rear corner Pd in the embodiment) is smaller than a threshold DistTh_Up, that is, Dist falls into a range between a detection dead zone threshold DistTh_Down of each sensor and a trigger threshold DistTh_Up of a detection distance of each sensor (Dist∈[DistTh_Down, DistTh_Up]), determining that there is a possibility that the vehicle bumps the obstacle in the initial vertical parking spot, executing step S004, or otherwise returning to the step 5001. Wherein in the embodiment, the dead zone threshold DistTh_Down is 0.3m (the detection dead zone threshold of each trigger threshold is ensured when the dead zone threshold is smaller than or equal to 0.3m, and output is kept at 0.3m); and the trigger threshold of the ultrasonic detection distance DistTh_Up is 0.4m.

S004, locating the obstacle by using the triangulation location method based on public detection FOV (Field of View) of the ultrasonic sensors SR_RR, LR_RR and the single-input multiple-output mechanism of ultrasonic waves. If the ultrasonic detection distance is Dist∈[DistTh_Down, DistTh_Up], the obstacle is capable of being located, and executing step S005, or otherwise executing step S013.

S005, calculating a coordinate (obj_x, obj_y) of the obstacle in the large coordinate system x-o-y, recording an obstacle coordinate point set W={(obj_x(n), obj_y(n)) | N=1,2,3,...N} with a data length being N in a form of a sliding window according to time (a set of points with a fixed size is cached, for example, 10 points; and then after each refreshing, one point is updated into a cache, the "earliest" point is deleted at the same time, so that in each updating period, new points may be continuously updated into the cache, and the "earliest" point may be continuously deleted, an objective of which is to always keep an array of a fixed size and process historical data to obtain an accurate result), wherein N is natural integer, obj_x(n) is a coordinate value in an X axis of the obstacle, obj_y(n) is a coordinate value in an Y axis of the obstacle, and preferably, N is 5.

S006, conducting least-square line fitting on the point set W to obtain a straight line L: y=K*x+b.

S007, solving a mean square root Var of a distance between each point in the point set W and the straight line L:

$$Var = \sqrt{(\sum_{i=1}^{N} \frac{|K * obj\_x(i) - b - obj\_y(i)|^2}{1 + K^2})/N} \; .$$

S008, judging the value of Var, considering that the point set W does not meet the calculation requirement if Var is larger than a preset value VarTh (Var>VarTh), then executing the step S001 again, or otherwise, executing step S009, wherein the preset value VarTh may be selected from [0.01, 0.03], and is preferably 0.01.

S009, determining a horizontal ordinate O_x=obj_x(N) and a longitudinal coordinate O_y=obj_y(N) of the point O.

The steps S005-S009 is substantially to calculate the coordinate information of the point O at which the obstacle is most possibly in contact with the vehicle. It is to be understood that, in other embodiments, other calculation methods of the coordinate information of the point O at which the obstacle is most possibly in contact with the vehicle may be employed.

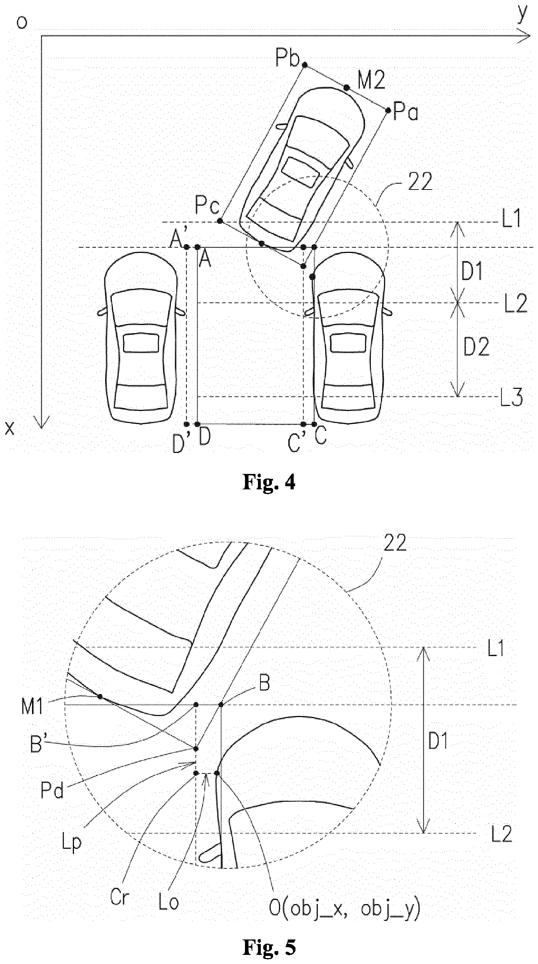

S010, calculating a slope $K_1$ of a long edge, close to the obstacle, of the initial vertical parking spot, which is the slope $K_1$ of the long edge BC in this embodiment. Then obtaining a first straight line (Lo: y=(-1/$K_1$)*(x-O_x)+O_y) which passes through the point O and has a slop -1/$K_1$ and a second straight line (Lp: y=$K_1$*(x-Pd_x)+Pd_y) which passes through the right rear corner Pd (the first vehicle corner) and has a slop $K_1$, and calculating coordinate information (Cr_x, Cr_y) of an intersection Cr of the first straight line Lo and the second straight line Lp. FIG. 5 is an enlarged view of a potion encircled by a dotted circle 22 in FIG. 4, from which the process of formation of the intersection Cr may be seen.

S011, calculating an offset of the target vertical parking spot (the four corner points of which are denoted as A', B', C', D' and the four edges of which are denoted by dotted lines) relative to the initial vertical parking spot according to the coordinate information (Cr_x, Cr_y) of an intersection Cr and the coordinate information of the outer boundary of the initial vertical parking spot. As the X axis is generally parallel to the long edges of the parking spot, the offset Delt_y=|B_y-Cr_y| in the direction of the Y axis needs to be calculated only.

S012, solving coordinate information A'-B'-C'-D' of the four corners of the target vertical parking spot according to the calculated offset, and then executing the step S001.

When the initial vertical parking spot is measured, measurement of a straight line, in which the inlet short edge is located, is accurate, and the long edges of the initial vertical parking spot and the target vertical parking spots are substantially parallel to the X axis in the coordinate system usually, so that after the offset of the initial vertical parking spot is calculated, the initial vertical parking spot may be translated in the direction, away from the obstacle, along the inlet short edge with the offset in the Y axis direction only to obtain the target vertical parking spot.

Thus, under the condition capable of determining the coordinate of the point Cr, the coordinate information of the outer boundary of the target vertical parking spot may be directly calculated according to the point O, the first vehicle corner and the coordinate information of the outer boundary of the initial vertical parking spot. In the embodiment, a coordinate value B' is (B_x, Cr_y); and also because Cr_y is substantially equal to Pd_y, the coordinate value B' is (B_x, Pd_y). That is, the step S010 and the step S011 are methods of calculating the offset of the parking spot under the condition capable of obtaining the coordinate information of the point O, the substance of which is to obtain the second straight line Lp which passes through the first vehicle corner Pd (the right rear corner) and has the slop $K_1$, then obtain a coordinate of an intersection B' of the second straight line Lp and the inlet short edge AB of the initial vertical parking spot, translate the initial vertical parking spot in the direction, away from the obstacle, along the inlet short edge to enable the corner point, close to the first vehicle corner, of the target vertical parking spot to be located at the intersection B' and thus obtaining the coordinate information A'-B'-C'-D' of the outer boundary of the target vertical parking spot.

S013, calculating an offset Delt=|B_y-Pd_y|-sqrt(Dist$^2$-|B_x-Pd_x|$^2$) of the target vertical parking spot relative to the initial vertical parking spot in the Y axis direction according to the coordinate information (Pd_x, Pd_y) of the right rear corner Pd (first vehicle corner), the coordinate information (B_x, B_y) of the corner point B of the inlet short edge, close to the right rear corner Pd (first vehicle corner), of the initial vertical parking spot and the obstacle detection distant Dist of the ultrasonic sensors SR_RR and LR_RR at the right rear corner Pd (first vehicle corner). Then executing the step S012.

That is, under the condition that the obstacle cannot be located, the coordinate information of the outer boundary of the target vertical parking spot is calculated according to the obstacle detection distance Dist, the first vehicle corner and the coordinate information of the corner point, close to the first vehicle corner, of the inlet short edge of the initial vertical parking spot. Particularly, with use of the Dist, the coordinate values of the right rear corner Pd (first vehicle corner) and the corner point B, the Dist serves as a length of a hypotenuse of a right triangle, a difference value between the right rear corner Pd and the corner point B in the X axis direction serves as a length of a right-angle side, parallel to the X axis, of the right triangle, and a length of a right-angle side, parallel to the Y axis, of the right triangle is solved and serves as a difference value between the right rear corner Pd and the corner point B' of the target vertical parking spot in the Y axis direction.

S014, judging whether the point M1 is in the middle reference line L2 or the end reference line L3 or has entered the region D2 (that is, between the middle reference line L2 and the end reference line L3) or not according to the coordinate information (M1_x, M1_y, Theta) of the point M1 of the boundary of the tail of the vehicle, if yes, returning to a second parking spot relocating state from the first parking spot relocating state, and executing step S015, or otherwise, executing step S200.

S015, defining an obstacle detection distance of the ultrasonic sensor SR_RR at the right rear corner of the vehicle to be DistR and an obstacle detection distance of the ultrasonic sensor SR_RL at the left rear corner of the vehicle to be DistL, judging whether (DistL+DistR) is larger than 2* DistTh_Up or not, and if yes, executing step S016, or otherwise, executing step S021.

S016, judging whether DistL> DistTh_Up and DistR> DistTh_Up or not, if yes, judging that parking may be continued, and executing the step S001, or otherwise, executing step S017.

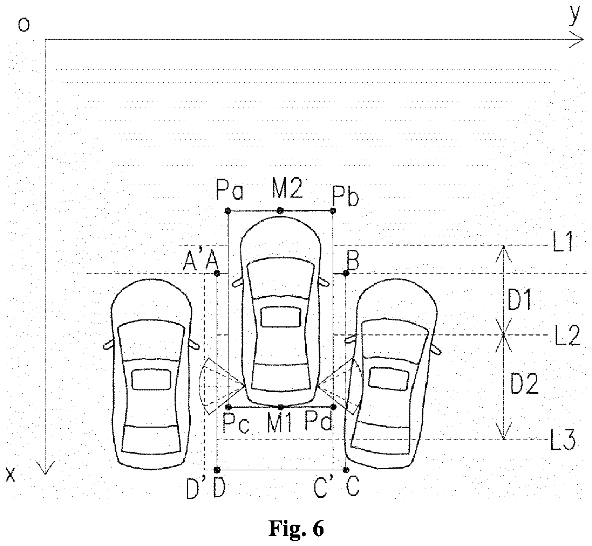

S017, judging whether DistL> DistTh_Up and DistR≤DistTh_Up or not, if yes, determining that an obstacle exists on the right side of the vehicle (referring to a fan-shaped ultrasonic radiation range in FIG. 6), and executing the step S018, or otherwise, executing step S019.

S018, calculating a parking spot adjustment offset to be Delt= DistTh_Up-DistR, and executing step S019.

S019, judging whether DistL≤ DistTh_Up and DistR>DistTh_Up or not, if yes, determining that an obstacle exists on the left side of the vehicle, and executing the step S020, or otherwise, executing the step S001.

S020, determining an offset needing to be adjusted to be Delt= DistTh_Up-DistL, and executing the step S012.

S021, determining the parking spot which cannot be used for parking and outputting a prompting message.

The substance of the steps S015-S021 is to judge whether at least one side of the vehicle has an enough position for a person to get on or off the vehicle or not according to the DistR, the DistL and a trigger threshold DistTh_Up of the detection distance of the ultrasonic sensor at each corner of the vehicle, and outputting a prompting message of a parking spot which cannot be used for parking according to a judgment result, or calculating the coordinate information of the outer boundary of the target vertical parking spot according to the judgment result to enable the person to get on or off the vehicle from at least one side of the vehicle after parking is completed. It is to be understood that, DistTh_Up may be replaced with other preset values for judgment, for example, different values are employed according to vehicle sales territories by considering different body types of different races or standard parking spots of vehicles in different regions. The judgment result guides that there is an enough space for the person to get on or off the vehicle on at least one side of the vehicle only.

S200, judging whether the coordinate information of the midpoint M1 of the boundary of the tail of the vehicle arrives at the end reference line L3 or not, if yes, completing parking, or otherwise, executing the step S001. In the S200 of other embodiments, whether parking is completed or not may also be determined by judging whether the head of the vehicle enters the inlet short edge of the parking spot or not, and at this time, a positional relationship between the point M1 and the end reference line L3 does not need to be judged, and the end reference line L3 may be canceled. For example, parking is ensured to be completed if the point M2 or all of points Pa and Pb of the head of the vehicle are judged to cross the inlet short edge of the parking spot or if the points Pa and Pb of the head of the vehicle cross the inlet short edge of the parking spot and are at distances with the inlet short edge of both being larger than 0.1m.

By executing the vertical parking method, the following effects may be achieved:

(1) when the vehicle is parked into the region D1, the position of the real parking spot may be predicted through an obstacle locating method to obtain a real and effective parking spot, so that the accuracy that the vehicle is parked into the parking spot and the user experience may be improved;

(2) when the vehicle is parked into the region D2, as vehicles on the two sides of a vertical parking spot may be slantingly parked, and the tail of the parking spot may be relatively narrow, a distance between obstacles on the two sides may be detected with the ultrasonic waves to obtain the real and effective parking spot, and the person may be ensured to normally open a vehicle door and get off the vehicle after the vehicle is parked into the parking spot; and

(3) a parking spot detection error caused by location with the ultrasonic waves by the vehicle may be reduced, and the success rate that the vehicle is parked into the parking spot is increased.

Thus, in the automatic or semi-automatic parking process, the vehicle continuously relocates the parking spot according to the states of the surrounding obstacles, so that the estimation error of an initial parking spot is eliminated, the situation that after the vehicle is parked into the parking spot, as a distance between the vehicle and a reference vehicle on the left side or the right side is relatively small, a passenger cannot normally get off the vehicle is avoided, and the situation that at the last step that the vehicle is parked into the parking spot, braking of the vehicle is interrupted as the vehicle encounters the obstacle in the vehicle advancing process due to an error of the parking spot, and the user experience is influenced is also avoided.

In other embodiments, it is to be understood that, the step S016 and the step S017 may be interchanged.

In other embodiments, it is to be understood that, the position (the coordinate information of the outer boundary) of the initial vertical parking spot may be obtained by a third party and is converted to a coordinate in the large coordinate system x-o-y by the driving system of the vehicle.

In the above embodiments, by considering that measurement of the position, at which the inlet short edge is located, is accurate when the initial vertical parking spot is measured, so that when final coordinate information of the target vertical parking spot is calculated, calculation is achieved by translating the initial vertical parking spot in the direction, away from the obstacle, along the inlet short edge. It is to be understood that, under the condition of calculating the offset, a final coordinate of the target vertical parking spot may be obtained by other algorithms.

In other embodiments, the end reference line L3 may be omitted, that is, the solution of the present invention may also be implemented without defining the end reference line L3.

In other embodiments, in the step S002, as long as a preset point on the vehicle needs to be located in a medial axle (a median axle perpendicular to a front axle and a rear axle) of the vehicle and close to the head or the tail of the vehicle only, and coordinate information of the point is located in the starting reference line L1 or has entered the region between the starting reference line L1 and the middle reference line L2, the step S002 may be executed. When the preset point is not the midpoint of the boundary of the head of the vehicle and the midpoint of the boundary of the tail of the vehicle, the positions of the starting reference line and the middle reference line relative to the inlet short edge should be modified in contrast.

In the above embodiments, the vehicle corner which first crosses the starting reference line L1 in the parking process is set to be the right rear corner Pd (serving as the first vehicle corner). It is to be understood that, when the first vehicle corner is the left rear corner, the left front corner or the right front corner, a vehicle corner, corresponding to the real "first vehicle corner" and the corner point, close to the "the first vehicle corner" or the corner points of the initial vertical parking spot and the target vertical parking spot corresponding to the "the first vehicle corner" in the vehicle corner required to be correspondingly adjusted only. for example, when the first vehicle corner is the left rear corner, " judging an obstacle detection distance of each of the ultrasonic sensors SR_RR and LR_RR of the right rear corner Pd (the first vehicle corner)" in the step S003 is modified into "judging an obstacle detection distance of each of the ultrasonic sensors SR_RL and LR_RL of the left rear corner Pc (the first vehicle corner)"; "ultrasonic sensors SR_RR and LR_RR" in the step S004 is modified into "ultrasonic sensors SR_RL and LR_RL"; in the step S010, "calculating the slope of the long edge BC" is modified into "calculating the slope of the long edge AD"; "crosses the right rear corner Pd (the first vehicle corner) and has the slope..." is modified into "crosses the left rear corner Pd (the first vehicle corner) and has the slope..."; "particularly, the coordinate information (Pd_x, Pd_y) of the right rear corner Pd (the first vehicle corner)" in the step S011 is modified into "particularly, the coordinate information (Pc_x, Pc_y) of the left rear corner Pc (the first vehicle corner)"; "calculating an offset Delt=$|B\_y-Pd\_y|-sqrt(Dist^2 -|B\_x-Pd\_x|^2)$ of the target vertical parking spot relative to the initial vertical parking spot by using the coordinate information (Pd_x, Pd_y) of the right rear corner Pd (first vehicle corner), the coordinate information (B_x, B_y) of the corner point B of the inlet short edge, close to the right rear corner Pd (first vehicle corner), of the initial vertical parking spot and the obstacle detection distant Dist of the ultrasonic sensors SR_RR and LR_RR at the right rear corner Pd (first vehicle corner)" in the step S013 is modified into "calculating an offset Delt=$|A\_y-Pc\_y|-sqrt(Dist^2-|A\_x-Pc\_x|^2)$ of the target vertical parking spot relative to the initial vertical parking spot by using the coordinate information (Pc_x, Pc_y) of the left rear corner Pc (first vehicle corner), the coordinate information (A_x, A_y) of the corner point A of the inlet short edge, close to the left rear corner Pc (first vehicle corner), of the initial vertical parking spot and the obstacle detection distant Dist of the ultrasonic sensors SR_RL and LR_RL at the left rear corner Pc (first vehicle corner)". However, parameters in the steps S014-S020 do not vary along with change of the first vehicle corner into the left rear corner or the left front corner.

In description of the present invention, it should be understood that orientations or positional relationships indicated by terms, such as "upper", "lower", "front", "rear", "left", "right", "vertical", "horizontal", "top", "bottom", "inner" and "outer", are based on orientations or positional relationships shown in the drawings, are to facilitate the description of the present invention and simplify the description merely, do not indicate or imply that the referred apparatuses or elements must have specific orientations and are constructed and operated in the specific orientations and thus should not be construed to limit the present invention.

In addition, the terms "first" and "second" are used only for description and shall not be interpreted as an indication or implication of relative importance or an implicit indication of the number of technical features. Thus, features defined with "first" and "second" may include at one or more such features, either explicitly or implicitly. In the description of the present invention, "a plurality" means two or more, unless otherwise specifically defined.

Although description of the present invention is made in combination with the above specific embodiments, it will be apparent to those skilled in the art that many alterations, modifications and variations can be made according to the above-mentioned contents. Therefore, all such alterations, modifications and variations are included in the scope of the appended claims.

**Claims**

1. A vertical parking method, **characterized in that** in a process that an initial vertical parking spot and coordinate information of an outer boundary of the initial vertical parking spot are obtained through detection with sensors or from a third party for parking, a starting reference line located beyond an inlet short edge of the initial vertical parking spot is defined, a shortest distance between each point in the starting reference line and the inlet short edge is larger than a trigger threshold of a detection distance of each ultrasonic sensor at each vehicle corner of a vehicle; and a vehicle corner which may first cross the starting reference line in the parking process is defined as a first vehicle corner; the vertical parking method comprises the steps of:

   step 1, locating an obstacle when coordinate information of a preset position, close to a first vehicle corner, of a vehicle is located in the starting reference line or on one side, close to the initial vertical parking spot, of the starting reference line, and ultrasonic sensors at the first vehicle corner detect the obstacle, and then executing step 2;
   step 2, calculating coordinate information of a point O at which the obstacle is most possibly in contact to the vehicle, and calculating coordinate information of an outer boundary of a relocated target vertical parking spot according to the point O, the first vehicle corner and the coordinate information of the outer boundary of the initial vertical parking spot; and
   step 3, conducting parking according to the coordinate information of the outer boundary of the target vertical parking spot.

2. The vertical parking method according to claim 1, **characterized in that** in the step 2, a method of calculating the coordinate information of the outer boundary of the target vertical parking spot comprises the steps of:

   calculating a slope $K_1$ of a long edge of the initial vertical parking spot;
   obtaining a second straight line which passes through the first vehicle corner and has a slope $K_1$;
   calculating coordinate information of an intersection of the second straight line and the inlet short edge of the initial vertical parking spot; and
   translating the initial vertical parking spot in a direction, away from the obstacle, along the inlet short edge to obtain the coordinate information of the outer boundary of the target vertical parking spot by enabling a corner point, close to the first vehicle corner, of the target vertical parking spot to be located at the intersection.

3. The vertical parking method according to claim 2, **characterized in that** in the step 2, a method of calculating the coordinate information of the point O at which the obstacle is most possibly in contact to the vehicle comprises the steps of:

   recording an obstacle coordinate point set W={(obj_x(n), obj_y(n)) | N=1,2,3,...N} with a data length being N in a form of a sliding window according to time, wherein N is natural integer, obj_x(n) is a coordinate value in an X axis of the obstacle, and obj_y(n) is a coordinate value in an Y axis of the obstacle;
   conducting least-square line fitting on the point set W to obtain a straight line

$$L: y=K*x+b;$$

   solving a mean square root Var of a distance between each point in the point set W and the straight line L:

$$Var = \sqrt{\left(\sum_{i=1}^{N} \frac{|K*obj\_x(i)-b-obj\_y(i)|^2}{1+K^2}\right)/N}$$

   and judging the value of Var, considering that the point set W does not meet the calculation requirement if Var is larger than a preset value, then executing the step 1 again, or otherwise, determining a horizontal ordinate O_x=obj_x(N) and a longitudinal coordinate O_y=obj_y(N) of the point O.

4. The vertical parking method according to claim 1, **characterized in that** in the step 1, if the obstacle cannot be located, step 4 is executed, comprising the steps of:
calculating the coordinate information of the outer boundary of the target vertical parking spot according to an obstacle detection distance Dist of each ultrasonic sensor at the first vehicle corner, the first vehicle corner and the coordinate information of the corner point, close to the first vehicle corner, of the inlet short edge of the initial vertical parking spot, and then executing the step 3.

5. The vertical parking method according to claim 4, **characterized in that** in the step 4, the method of calculating the coordinate information of the outer boundary of the target vertical parking spot comprises the steps of:

calculating an offset Delt: $|B\_y-Pd\_y|-sqrt(Dist^2-|B\_x-Pd\_x|^2)$ of the target vertical parking spot relative to the initial vertical parking spot in an Y axis direction, wherein the Y axis is substantially parallel to the inlet short edge of the initial vertical parking spot, B_x and B_y are coordinate values in the X axis and the Y axis of a corner point B, close to the first vehicle corner, of the initial vertical parking spot respectively; Pd_x and Pd_y are coordinate values of the first vehicle corner in the X axis and the Y axis respectively; and
translating the initial vertical parking spot in the direction, away from the obstacle, along the inlet short edge with the offset Delt, thus obtaining the coordinate information of the outer boundary of the target vertical parking spot.

6. The vertical parking method according to claim 1, **characterized in that** a middle reference line is further defined and is located between the inlet short edge of the initial vertical parking spot and a bottom short edge of the initial vertical parking spot; the vertical parking method further comprises the steps of:
when the coordinate information of the preset position of the vehicle is between the middle reference line and the bottom short edge of the initial vertical parking spot, obstacle detection distances of the ultrasonic sensors for detecting obstacles on the two sides of the vehicle at the first vehicle corner and a second vehicle corner opposite to the first vehicle corner of the vehicle are DistR and DistL respectively, the first vehicle corner is a right rear corner, and the second vehicle corner is a left rear corner, executing step 5: judging whether at least one side of the vehicle has an enough position for a person to get on or off the vehicle according to the DistR, the DistL and a trigger threshold DistTh_Up of the detection distance of each ultrasonic sensor at each corner of the vehicle, and outputting a prompting message of a parking spot which cannot be used for parking according to a judgment result, or calculating the coordinate information of the outer boundary of the target vertical parking spot according to the judgment result, and executing step 3 to enable the person to get on or off the vehicle from at least one side of the vehicle after parking is completed.

7. The vertical parking method according to claim 6, **characterized in that** in the step 5, the method of judging whether at least one side of the vehicle has the enough position for the person to get on or off the vehicle comprises the steps of:

(1) when (DistL+DistR)<2*DistTh_Up, determining the parking spot which cannot be used for parking and outputting the prompting message; and
(2) if (DistL+DistR)≥2*DistTh_Up:

(a) if DistL>DistTh_Up and DistR > DistTh_Up, determining that parking may be continued;
(b) if DistL>DistTh_Up and DistR≤DistTh_Up, determining that the obstacle exists on the right side of the vehicle, and determining that a parking spot adjustment offset to be Delt=DistTh_Up-DistR, then calculating the coordinate information of the outer boundary of the target vertical parking spot, and executing the step 3; and
(c) if DistL≤DistTh_Up and DistR>DistTh_Up, considering that the obstacle exists on the left side of the vehicle, and determining an offset needing to be adjusted to be Delt=DistTh_Up-DistL, then calculating the coordinate information of the outer boundary of the target vertical parking spot, and executing the step 3.

8. The vertical parking method according to claim 1, **characterized in that** when the first vehicle corner is a vehicle front corner, the preset position is a midpoint of a boundary of a head of the vehicle; and when the first vehicle corner is a vehicle rear corner, the preset position is a midpoint of a boundary of a tail of the vehicle.

9. The vertical parking method according to claim 8, **characterized in that** an end reference line, close to the bottom short edge of the initial vertical parking spot, is further defined; and parking is completed when the preset position is judged to arrive the end reference line.

**10.** The vertical parking method according to claim 9, **characterized in that** when the vehicle is judged to wholly enter the inlet short edge of the parking spot, parking is completed.

**Patentansprüche**

**1.** Ein Verfahren zum vertikalen Einparken, **dadurch gekennzeichnet, dass** in einem Prozess, bei dem ein anfänglicher vertikaler Parkplatz und Koordinateninformationen einer äußeren Begrenzung des anfänglichen vertikalen Parkplatzes zum Einparken durch Erfassung mit Sensoren oder von einer dritten Partei erhalten werden, eine Startreferenzlinie, die sich jenseits einer kurzen Einlasskante des anfänglichen vertikalen Parkplatzes befindet, definiert wird, ein kürzester Abstand zwischen jedem Punkt auf der Startreferenzlinie und der kurzen Einlasskante größer als ein Auslöseschwellenwert eines Erfassungsabstands jedes Ultraschallsensors an jeder Fahrzeugecke eines Fahrzeugs ist; und eine Fahrzeugecke, die die Startreferenzlinie während des Einparkprozesses zuerst kreuzen kann, als eine erste Fahrzeugecke definiert wird;

das Verfahren zum vertikalen Einparken umfasst folgende Schritte:

Schritt 1, Lokalisieren eines Hindernisses, wenn sich die Koordinateninformationen einer voreingestellten Position eines Fahrzeugs in der Nähe einer ersten Fahrzeugecke auf der Startreferenzlinie befinden oder auf einer Seite der Startreferenzlinie in der Nähe des anfänglichen vertikalen Parkplatzes befinden, und Ultraschallsensoren an der ersten Fahrzeugecke das Hindernis erkennen, und dann Ausführen von Schritt 2;
Schritt 2, Berechnen von Koordinateninformationen eines Punktes O, an dem das Hindernis mit höchster Wahrscheinlichkeit in Kontakt mit dem Fahrzeug kommt, und Berechnen von Koordinateninformationen einer äußeren Begrenzung eines verschobenen vertikalen Zielparkplatzes gemäß Punkt O, der ersten Fahrzeugecke und den Koordinateninformationen der äußeren Begrenzung des anfänglichen vertikalen Parkplatzes; und
Schritt 3, Durchführen des Einparkens entsprechend der Koordinateninformationen der äußeren Begrenzung des vertikalen Zielparkplatzes.

**2.** Verfahren zum vertikalen Einparken nach Anspruch 1, **dadurch gekennzeichnet, dass** in Schritt 2 ein Verfahren zum Berechnen der Koordinateninformationen der äußeren Begrenzung des vertikalen Zielparkplatzes folgende Schritte umfasst:

Berechnung der Neigung $K_1$ einer langen Kante des ersten vertikalen Parkplatzes; Ermitteln einer zweiten geraden Linie, die durch die erste Fahrzeugecke verläuft und eine Neigung $K_1$ aufweist;
Berechnen von Koordinateninformationen eines Schnittpunkts der zweiten geraden Linie und der kurzen Einlasskante des anfänglichen vertikalen Parkplatzes; und Verschieben des anfänglichen vertikalen Parkplatzes in einer Richtung weg von dem Hindernis, entlang der kurzen Einlasskante, um die Koordinateninformationen der äußeren Begrenzung des vertikalen Zielparkplatzes zu erhalten, indem ermöglicht wird, dass ein Eckpunkt des vertikalen Zielparkplatzes, der nahe der ersten Fahrzeugecke liegt, auf dem Schnittpunkt liegt.

**3.** Verfahren zum vertikalen Einparken nach Anspruch 2, **dadurch gekennzeichnet, dass** in Schritt 2 ein Verfahren zum Berechnen der Koordinateninformationen des Punktes O, an dem das Hindernis mit höchster Wahrscheinlichkeit mit dem Fahrzeug in Kontakt kommt, die folgenden Schritte umfasst:

Aufzeichnen einer Hindernis-Koordinatenpunktmenge W={(obj_x(n), obj_y(n)) | N=1,2,3,...N} mit einer Datenlänge von N in Form eines gleitenden Fensters nach der Zeit, wobei N eine natürliche ganze Zahl ist, obj_x(n) ein Koordinatenwert auf einer X-Achse des Hindernisses ist und obj_y(n) ein Koordinatenwert auf einer Y-Achse des Hindernisses ist;
Durchführung einer Geradeneinpassung nach dem Prinzip der kleinsten Quadrate auf der Punktmenge W, um eine Gerade L zu erhalten: y=K*x+b;
Lösung der Quadratwurzel Var des mittleren Abstands zwischen jedem Punkt der Punktmenge W und der Geraden L:

$$Var = \sqrt{\left(\sum_{i=1}^{N} \frac{|K * obj\_x(i) - b - obj\_y(i)|^2}{1 + K^2}\right) / N}$$

und Beurteilen des Wertes von Var, wobei in Betracht gezogen wird, dass die Punktmenge W die Berechnungsanforderung nicht erfüllt, wenn Var größer als ein voreingestellter Wert ist, dann erneutes Ausführen von Schritt 1, oder andernfalls, Bestimmen einer horizontalen Ordinate O_x=obj_x(N) und einer Längskoordinate O_y=obj_y(N) des Punktes O.

4. Verfahren zum vertikalen Einparken nach Anspruch 1, **dadurch gekennzeichnet, dass** in Schritt 1, wenn das Hindernis nicht lokalisiert werden kann, Schritt 4 ausgeführt wird, der die folgenden Schritte umfasst:
Berechnen der Koordinateninformationen der äußeren Begrenzung des vertikalen Zielparkplatzes gemäß einer Hindernis-Erkennungsentfernung Dist jedes Ultraschallsensors an der ersten Fahrzeugecke, der ersten Fahrzeugecke und der Koordinateninformationen des Eckpunktes der kurzen Einlasskante des anfänglichen vertikalen Parkplatzes nahe der ersten Fahrzeugecke, und anschließendes Ausführen von Schritt 3.

5. Verfahren zum vertikalen Einparken nach Anspruch 4, **dadurch gekennzeichnet, dass** in Schritt 4 das Verfahren zum Berechnen der Koordinateninformationen der äußeren Begrenzung des vertikalen Zielparkplatzes die folgenden Schritte umfasst:

Berechnen eines Versatzes Delt: $|B\_y-Pd\_y|-sqrt(Dist^2 -|B\_x-Pd\_x|^2 )$ des vertikalen Zielparkplatzes relativ zu dem anfänglichen vertikalen Parkplatz in einer Richtung der Y-Achse, wobei die Y-Achse im Wesentlichen parallel zu der kurzen Einlasskante des anfänglichen vertikalen Parkplatzes ist, B_x und B_y Koordinatenwerte auf der X-Achse bzw. der Y-Achse eines Eckpunktes B nahe der ersten Fahrzeugecke des anfänglichen vertikalen Parkplatzes sind, und Pd_x und Pd_y Koordinatenwerte der ersten Fahrzeugecke auf der X-Achse bzw. der Y-Achse sind; und
Verschieben des anfänglichen vertikalen Parkplatzes weg von dem Hindernis, entlang der kurzen Einlasskante mit dem Versatz Delt, wodurch die Koordinateninformationen der äußeren Begrenzung des vertikalen Zielparkplatzes erhalten werden.

6. Verfahren zum vertikalen Einparken nach Anspruch 1, **dadurch gekennzeichnet, dass** weiter eine mittlere Referenzlinie definiert ist, die sich zwischen der kurzen Einlasskante des anfänglichen vertikalen Parkplatzes und einer kurzen Unterkante des anfänglichen vertikalen Parkplatzes befindet; das Verfahren zum vertikalen Einparken umfasst ferner die folgenden Schritte:
wenn die Koordinateninformationen der voreingestellten Position des Fahrzeugs zwischen der mittleren Referenzlinie und der unteren kurzen Kante des anfänglichen vertikalen Parkplatzes liegen, sind Hindernis-Erkennungsentfernungen der Ultraschallsensoren zum Erkennen von Hindernissen auf den zwei Seiten des Fahrzeugs an der ersten Fahrzeugecke und einer zweiten Fahrzeugecke gegenüber der ersten Fahrzeugecke des Fahrzeugs DistR bzw. DistL, die erste Fahrzeugecke ist eine rechte hintere Ecke und die zweite Fahrzeugecke ist eine linke hintere Ecke, Ausführen von Schritt 5: Beurteilen, ob mindestens eine Seite des Fahrzeugs eine ausreichende Position zum Ein- oder Aussteigen einer Person in das Fahrzeug hat entsprechend DistR, DistL und einer Auslöseschwelle DistTh_Up des Erkennungsabstands jedes Ultraschallsensors an jeder Ecke des Fahrzeugs, und Ausgeben einer Nachricht bei einem Parkplatz, der gemäß dem Ergebnis der Beurteilung nicht zum Parken verwendet werden kann, oder Berechnen der Koordinateninformationen der äußeren Begrenzung des vertikalen Zielparkplatzes gemäß dem Ergebnis der Beurteilung und Ausführen von Schritt 3, um der Person zu ermöglichen, in das Fahrzeug von mindestens einer Seite des Fahrzeugs aus ein- oder auszusteigen, nachdem das Parken abgeschlossen ist.

7. Verfahren zum vertikalen Einparken nach Anspruch 6, **dadurch gekennzeichnet, dass** in Schritt 5 das Verfahren zur Beurteilung, ob mindestens eine Seite des Fahrzeugs eine ausreichende Position für das Ein- oder Aussteigen der Person hat, die folgenden Schritte umfasst:

(1) wenn (DistL+DistR)<2*DistTh_Up: Festlegen dass der Parkplatz nicht zum Parken genutzt werden kann, und Ausgabe der Nachricht; und
(2) wenn (DistL+DistR)≥2*DistTh_Up:

(a) wenn DistL>DistTh_Up und DistR > DistTh_Up: Festlegen, dass das Parken fortgesetzt werden kann;
(b) wenn DistL>DistTh_Up und DistR≤DistTh_Up: Festlegen, dass ein Hindernis auf der rechten Seite des Fahrzeugs vorhanden ist, und einen Versatz zur Anpassung des Parkplatzes als Delt=DistTh_Up-DistR festlegen, dann Berechnen der Koordinateninformationen der äußeren Begrenzung des vertikalen Zielparkplatzes und Ausführen von Schritt 3; und
(c) wenn DistL≤DistTh_Up und DistR>DistTh_Up: Berücksichtigen, dass ein Hindernis auf der linken Seite des Fahrzeugs existiert, und einen erforderlichen Versatz zur Anpassung als Delt=DistTh_Up-DistL festlegen, dann Berechnen der Koordinateninformationen der äußeren Begrenzung des vertikalen Zielparkplatzes und Ausführen von Schritt 3.

8. Verfahren zum vertikalen Einparken nach Anspruch 1, **dadurch gekennzeichnet, dass**, wenn die erste Fahrzeugecke eine vordere Fahrzeugecke ist, die voreingestellte Position ein Mittelpunkt einer Begrenzung der Front des Fahrzeugs ist; und wenn die erste Fahrzeugecke eine hintere Fahrzeugecke ist, die voreingestellte Position ein Mittelpunkt einer Begrenzung des Hecks des Fahrzeugs ist.

9. Verfahren zum vertikalen Einparken nach Anspruch 8, **dadurch gekennzeichnet, dass** ferner eine Endbezugslinie nahe der unteren kurzen Kante des anfänglichen vertikalen Parkplatzes definiert wird und das Einparken abgeschlossen ist, wenn die Beurteilung ergibt, dass die voreingestellte Position die Endbezugslinie erreicht hat.

10. Verfahren zum vertikalen Einparken nach Anspruch 9, **dadurch gekennzeichnet, dass** das Einparken abgeschlossen ist, wenn die Beurteilung ergibt, dass das Fahrzeug vollständig in die kurze Einlasskante der Parklücke eingefahren ist.

## Revendications

1. Procédé de stationnement vertical, **caractérisé en ce que**, dans un processus où un point initial de stationnement vertical et des informations de coordonnées d'une limite extérieure du point initial de stationnement vertical sont obtenus par l'intermédiaire de détection avec des capteurs ou à partir d'une entité tierce pour le stationnement, une ligne de référence de départ localisée au-delà d'un bord court d'entrée du point initial de stationnement vertical est définie, une distance la plus courte entre chaque point dans la ligne de référence de départ et le bord court d'entrée est plus grande qu'un seuil de déclenchement d'une distance de détection de chaque capteur ultrasonique à chaque coin de véhicule d'un véhicule; et un coin de véhicule qui peut traverser en premier la ligne de référence de départ dans le processus de stationnement est défini comme étant le premier coin de véhicule;
le procédé de stationnement vertical comprend les étapes de:

étape 1, la localisation d'un obstacle lorsque des informations de coordonnées d'une position prédéfinie, près d'un premier coin de véhicule, d'un véhicule sont localisées dans la ligne de référence de départ ou sur un côté, près du point initial de stationnement vertical, de la ligne de référence de départ, et des capteurs ultrasoniques au premier coin de véhicule détectent l'obstacle, et alors l'exécution de l'étape 2;
étape 2, le calcul d'informations de coordonnées d'un point O auquel l'obstacle est le plus vraisemblablement en contact avec le véhicule, et le calcul d'informations de coordonnées d'une limite extérieure d'un point cible relocalisé de stationnement vertical selon le point O, le premier coin de véhicule et les informations de coordonnées de la limite extérieure du point initial de stationnement vertical; et
étape 3, la réalisation de stationnement selon les informations de coordonnées de la limite extérieure du point cible de stationnement vertical.

2. Procédé de stationnement vertical selon la revendication 1, **caractérisé en ce que**, dans l'étape 2, un procédé du calcul des informations de coordonnées de la limite extérieure du point cible de stationnement vertical comprend les étapes de:

le calcul d'une pente $K_1$ d'un bord long du point initial de stationnement vertical;
l'obtention d'une seconde ligne droite qui passe à travers le premier coin de véhicule et a une pente $K_1$; ;
le calcul d'informations de coordonnées d'une intersection de la seconde ligne droite et du bord court d'entrée du point initial de stationnement vertical; et
la translation du point initial de stationnement vertical dans une direction, à l'opposé de l'obstacle, le long du bord court d'entrée pour obtenir les informations de coordonnées de la limite extérieure du point cible de stationnement vertical en permettant à un point de coin, près du premier coin de véhicule, du point cible de stationnement vertical d'être localisé à l'intersection.

3. Procédé de stationnement vertical selon la revendication 2, **caractérisé en ce que**, dans l'étape 2, un procédé du calcul des informations de coordonnées du point O auquel l'obstacle est le plus vraisemblablement en contact avec le véhicule comprend les étapes de:

l'enregistrement d'un ensemble de points de coordonnées d'obstacle W = {(obj_x(n),obj_y(n))|N = 1,2,3,...N}, une longueur de données étant N, sous forme de fenêtre dynamique selon le temps, dans lequel N est un

## EP 3 929 046 B1

nombre entier naturel, obj_x(n) est une valeur de coordonnée dans un axe X de l'obstacle, et obj_y(n) est une valeur de coordonnée dans un axe Y de l'obstacle;

la réalisation d'ajustement de droite des moindres carrées sur l'ensemble de points W pour obtenir une ligne droite L : y = K * x + b;

la résolution d'une valeur quadratique moyenne Var d'une distance entre chaque point dans l'ensemble de points W et la ligne droite L:

$$\mathrm{Var} = \sqrt{\left( \sum_{i=1}^{N} \frac{\left| K * obj_{x(i)} - b - obj\_y(i) \right|^2}{1 + K^2} \right) / N}$$

et l'évaluation de la valeur de Var, en considérant que l'ensemble de points W ne satisfait pas à la condition de calcul si Var est plus grand qu'une valeur prédéfinie, puis l'exécution de l'étape 1 à nouveau, ou autrement, la détermination d'une ordonnée horizontale O_x = obj_x(N) et d'une coordonnée longitudinale O_y = obj_y(N) du point O.

4. Procédé de stationnement vertical selon la revendication 1, **caractérisé en ce que**, dans l'étape 1, si l'obstacle ne peut pas être localisé, l'étape 4 est exécutée, comprenant les étapes de:
le calcul des informations de coordonnées de la limite extérieure du point cible de stationnement vertical selon une distance de détection d'obstacle Dist de chaque capteur ultrasonique au premier coin de véhicule, le premier coin de véhicule et les informations de coordonnées du point de coin, près du premier coin de véhicule, du bord court d'entrée du point initial de stationnement vertical, et alors l'exécution de l'étape 3.

5. Procédé de stationnement vertical selon la revendication 4, **caractérisé en ce que**, dans l'étape 4, le procédé du calcul des informations de coordonnées de la limite extérieure du point cible de stationnement vertical comprend les étapes de:

le calcul d'un décalage Delt: $|B_y - Pd\_y| - sqrt(Dist^2 - |B\_x - Pd\_x|^2)$ du point cible de stationnement vertical relativement au point initial de stationnement vertical dans une direction d'axe Y, dans lequel l'axe Y est sensiblement parallèle au bord court d'entrée du point initial de stationnement vertical, $B\_x$ et $B\_y$ sont des valeurs de coordonnées dans l'axe X et l'axe Y d'un point de coin B, près du premier coin de véhicule, du point initial de stationnement vertical respectivement; $Pd\_x$ et $Pd\_y$ sont des valeurs de coordonnées du premier coin de véhicule dans l'axe X et l'axe Y respectivement; et
la translation du point initial de stationnement vertical dans la direction, à l'opposé de l'obstacle, le long du bord court d'entrée avec le décalage Delt, ainsi obtenant les informations de coordonnées de la limite extérieure du point cible de stationnement vertical.

6. Procédé de stationnement vertical selon la revendication 1, **caractérisé en ce qu'**une ligne de référence médiane est en outre définie et est localisée entre le bord court d'entrée du point initial de stationnement vertical et un bord court inférieur du point initial de stationnement vertical; le procédé de stationnement vertical comprend en outre les étapes de:
lorsque les informations de coordonnées de la position prédéfinie du véhicule est entre la ligne de référence médiane et le bord court inférieur du point initial de stationnement vertical, des distances de détection d'obstacle des capteurs ultrasoniques pour détecter des obstacles sur les deux côtés du véhicule au premier coin de véhicule et à un second coin de véhicule opposé au premier coin de véhicule du véhicule sont DistR et DistL respectivement, le premier coin de véhicule est un coin arrière droit, et le second coin de véhicule est un coin arrière gauche, l'exécution de l'étape 5: l'évaluation qu'au moins un côté du véhicule a, ou n'a pas, une position suffisante pour qu'une personne monte dans le véhicule ou en descende selon DistR, DistL et un seuil de déclenchement DistTh_Up de la distance de détection de chaque capteur ultrasonique à chaque coin du véhicule, et la sortie d'un message-guide d'un point de stationnement qui ne peut pas être utilisé pour le stationnement selon un résultat d'évaluation, ou le calcul des informations de coordonnées de la limite extérieure du point cible de stationnement vertical selon le résultat d'évaluation, et l'exécution de l'étape 3 pour permettre à la personne de monter dans le véhicule ou d'en descendre à partir d'au moins un côté du véhicule après que le stationnement est achevé.

7. Procédé de stationnement vertical selon la revendication 6, **caractérisé en ce que**, dans l'étape 5, le procédé de l'évaluation qu'au moins un côté du véhicule a, ou n'a pas, la position suffisante pour que la personne monte dans le véhicule ou en descende comprend les étapes de:

(1) lorsque (DistL + DistR) < 2 ∗ DistTh_Up, la détermination du point de stationnement qui ne peut pas être utilisé pour stationnement et la sortie du message-guide; et
(2) si DistL + DistR ≥ 2 ∗ DistTh_Up :

(a) si DistL > DistTh_Up et DistR > DistTh_Up, la détermination que le stationnement peut être continué;
(b) si DistL > DistTh_Up et DistR < DistTh_Up, la détermination que l'obstacle existe sur le côté droit du véhicule, et la détermination qu'un décalage d'ajustement de point de stationnement est Delt = DistTh_Up - DistR, alors le calcul des informations de coordonnées de la limite extérieure du point cible de stationnement vertical, et l'exécution de l'étape 3; et
(c) si DistL ≤ DistTh_Up et DistR > DistTh_Up, la considération que l'obstacle existe sur le côté gauche du véhicule, et la détermination qu'un décalage devant être ajusté est Delt = DistTh_Up - DistL, puis le calcul des informations de coordonnées de la limite extérieure du point cible de stationnement vertical, et l'exécution de l'étape 3.

8.  Procédé de stationnement vertical selon la revendication 1, **caractérisé en ce que**, lorsque le premier coin de véhicule est un coin avant de véhicule, la position prédéfinie est un point médian d'une limite d'un avant du véhicule; et, lorsque le premier coin de véhicule est un coin arrière de véhicule, la position prédéfinie est un point médian d'une limite d'un arrière du véhicule.

9.  Procédé de stationnement vertical selon la revendication 8, **caractérisé en ce qu'**une ligne de référence de fin, près du bord court inférieur du point initial de stationnement vertical, est en outre définie; et le stationnement est achevé lorsqu'il est évalué que la position prédéfinie arrive à la ligne de référence de fin.

10. Procédé de stationnement vertical selon la revendication 9, **caractérisé en ce que**, lorsqu'il est évalué que le véhicule entre entièrement dans le bord court d'entrée du point de stationnement, le stationnement est achevé.

**Fig. 1**

**Fig 2**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 201810031452
- US 2017210421 A1